# EUROPEAN PATENT APPLICATION

(11) **EP 4 190 980 A1**
(43) Date of publication of application: **07.06.2023**
(21) Application number: 21211664.4
(22) Date of filing: 01.12.2021
(51) Int. Cl.: E02F 9/26

(54) **APARATUS AND METHOD FOR DETERMINING THAT EQUIPMENT IS ATTACHED TO A WORK MACHINE**

(71) Applicant: Sandvik Mining and Construction Australia (Production/Supply) Pty Ltd, Milton QLD 4064 (AU)
(72) Inventor: McCormick, Michael, 33311 Tampere (FI)
(74) Representative: Sandvik

(57) **Abstract**

An apparatus, method and computer program product for: receiving information on an operational context of the work machine, detecting at least one beacon signal provided by a beacon associated with equipment attachable to the work machine, determining, based on the at least one beacon signal, a proximity status of the equipment, the proximity status relating to a proximity of the equipment to the work machine, determining, based on the operational context of the work machine, at least one criterion for the proximity status of the equipment, and determining, in response to determining that the at least one criterion for the proximity status of the equipment is fulfilled, that the equipment is attached to the work machine.

## Description

### TECHNICAL FIELD

The present application relates generally to determining a proximity status of equipment. More specifically, the present application relates to determining a proximity status of equipment attachable to a work machine.

### BACKGROUND

A work machine may be configured to operate using different kinds of removable or replaceable equipment. Monitoring a life cycle of a piece of equipment may be challenging as the piece of equipment may be used with a plurality of work machines, and machine hours of a work machine do not necessarily correspond to the usage of the piece of equipment.

Monitoring a life cycle of a piece of equipment may enable, for example, predicting servicing needs and collect operation data relating to the piece of equipment.

### SUMMARY

Various aspects of examples of the invention are set out in the claims. The scope of protection sought for various embodiments of the invention is set out by the independent claims. The examples and features, if any, described in this specification that do not fall under the scope of the independent claims are to be interpreted as examples useful for understanding various embodiments of the invention.

According to a first aspect of the invention, there is provided an apparatus comprising means for performing: receiving information on an operational context of the work machine, detecting at least one beacon signal provided by a beacon associated with equipment attachable to the work machine, determining, based on the at least one beacon signal, a proximity status of the equipment, the proximity status relating to a proximity of the equipment to the work machine, determining, based on the operational context of the work machine, at least one criterion for the proximity status of the equipment, and determining, in response to determining that the at least one criterion for the proximity status of the equipment is fulfilled, that the equipment is attached to the work machine.

According to a second aspect of the invention, there is provided a method comprising: receiving information on an operational context of the work machine, detecting at least one beacon signal provided by a beacon associated with equipment attachable to the work machine, determining, based on the at least one beacon signal, a proximity status of the equipment, the proximity status relating to a proximity of the equipment to the work machine, determining, based on the operational context of the work machine, at least one criterion for the proximity status of the equipment, and determining, in response to determining that the at least one criterion for the proximity status of the equipment is fulfilled, that the equipment is attached to the work machine.

According to a third aspect of the invention, there is provided a computer program comprising instructions for causing an apparatus to perform at least the following: receiving information on an operational context of the work machine, detecting at least one beacon signal provided by a beacon associated with equipment attachable to the work machine, determining, based on the at least one beacon signal, a proximity status of the equipment, the proximity status relating to a proximity of the equipment to the work machine, determining, based on the operational context of the work machine, at least one criterion for the proximity status of the equipment, and determining, in response to determining that the at least one criterion for the proximity status of the equipment is fulfilled, that the equipment is attached to the work machine.

According to a fourth aspect of the invention, there is provided an apparatus comprising at least one processor and at least one memory including computer program code, the at least one memory and the computer program code configured to with the at least one processor, cause the apparatus at least to: receive information on an operational context of the work machine, detect at least one beacon signal provided by a beacon associated with equipment attachable to the work machine, determine, based on the at least one beacon signal, a proximity status of the equipment, the proximity status relating to a proximity of the equipment to the work machine, determine, based on the information on the operational context of the work machine, at least one criterion relating to the proximity status of the equipment, and determine, in response to determining that the at least one criterion for the proximity status of the equipment is fulfilled, that the equipment is attached to the work machine.

According to a fifth aspect of the invention, there is provided a non-transitory computer readable medium comprising program instructions for causing an apparatus to perform at least the following: receiving information on an operational context of the work machine, detecting at least one beacon signal provided by a beacon associated with equipment attachable to the work machine, determining, based on the at least one beacon signal, a proximity status of the equipment, the proximity status relating to a proximity of the equipment to the work machine, determining, based on the operational context of the work machine, at least one criterion for the proximity status of the equipment, and determining, in response to determining that the at least one criterion for the proximity status of the equipment is fulfilled, that the equipment is attached to the work machine.

According to a sixth aspect of the invention, there is provided a computer readable medium comprising program instructions for causing an apparatus to perform at least the following: receiving information on an operational context of the work machine, detecting at least one beacon signal provided by a beacon associated with equipment attachable to the work machine, determining, based on the at least one beacon signal, a proximity status of the equipment, the proximity status relating to a proximity of the equipment to the work machine, determining, based on the operational context of the work machine, at least one criterion for the proximity status of the equipment, and determining, in response to determining that the at least one criterion for the proximity status of the equipment is fulfilled, that the equipment is attached to the work machine.

### BRIEF DESCRIPTION OF THE DRAWINGS

Some example embodiments will now be described with reference to the accompanying drawings:
Figure 1 shows a block diagram of an example apparatus in which examples of the disclosed embodiments may be applied;
Figure 2 shows a block diagram of another example apparatus in which examples of the disclosed embodiments may be applied;
Figure 3 illustrates an example work machine;
Figure 4 shows an example method incorporating aspects of examples of the invention; and
Figure 5 shows another example method incorporating aspects of examples of the invention.

### DETAILED DESCRIPTION OF THE DRAWINGS

The following embodiments are exemplifying. Although the specification may refer to "an", "one", or "some" embodiment(s) in several locations of the text, this does not necessarily mean that each reference is made to the same embodiment(s), or that a particular feature only applies to a single embodiment. Single features of different embodiments may also be combined to provide other embodiments.

Example embodiments relate to determining a proximity status of equipment attachable to a work machine. Some example embodiments further relate to utilizing the proximity status for tracking usage of the piece of equipment.

A work machine may be configured to operate using different kinds of removable or replaceable equipment. Monitoring a life cycle of a piece of equipment may be challenging as the piece of equipment may be used with a plurality of work machines, and machine hours of a work machine do not necessarily correspond to the usage of the piece of equipment.

An example embodiment relates to an apparatus configured to receive information on an operational context of the work machine, detect at least one beacon signal provided by a beacon associated with equipment attachable to the work machine, determine, based on the at least one beacon signal, a proximity status of the equipment, the proximity status relating to a proximity of the equipment to the work machine, determine, based on the information on the operational context of the work machine, at least one criterion relating to the proximity status of the equipment, and determine, in response to determining that the at least one criterion for the proximity status of the equipment is fulfilled, that the equipment is attached to the work machine.

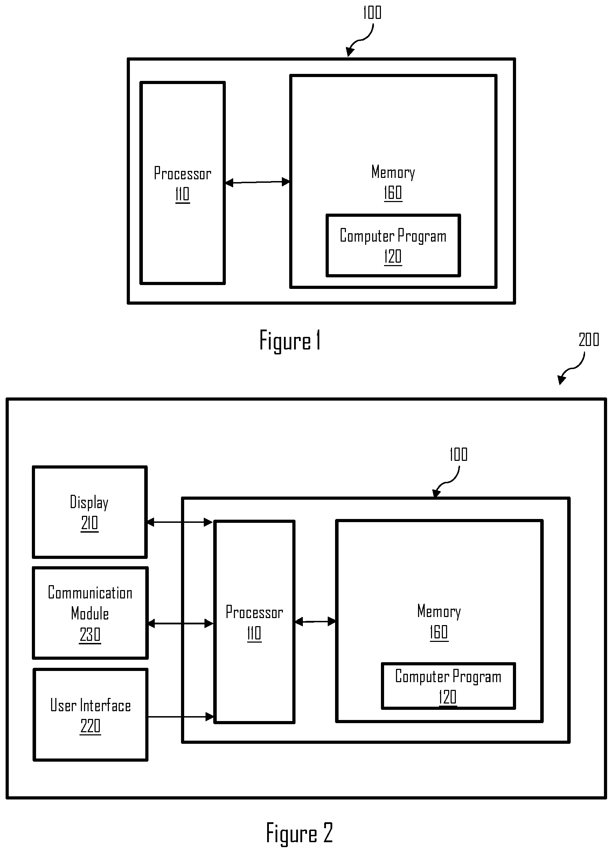

Figure 1 is a block diagram depicting an apparatus 100 operating in accordance with an example embodiment of the invention. The apparatus 100 may be, for example, an electronic device such as a module comprised by an automation or control system, a chip or a chipset. The apparatus 100 comprises one or more control circuitry, such as at least one processor 110 and at least one memory 160, including one or more algorithms such as computer program instructions 120 wherein the at least one memory 160 and the computer program instructions are configured, with the at least one processor 110 to cause the apparatus to carry out any of example functionalities described below.

In the example of Figure 1, the processor 110 is a control unit operatively connected to read from and write to the memory 160. The processor 110 may also be configured to receive control signals received via an input interface and/or the processor 110 may be configured to output control signals via an output interface. In an example embodiment the processor 110 may be configured to convert the received control signals into appropriate commands for controlling functionalities of the apparatus.

The at least one memory 160 stores computer program instructions 120 which when loaded into the processor 110 control the operation of the apparatus 100 as explained below. In other examples, the apparatus 100 may comprise more than one memory 160 or different kinds of storage devices.

Computer program instructions 120 for enabling implementations of example embodiments of the invention or a part of such computer program instructions may be loaded onto the apparatus 100 by the manufacturer of the apparatus 100, by a user of the apparatus 100, or by the apparatus 100 itself based on a download program, or the instructions can be pushed to the apparatus 100 by an external device. The computer program instructions may arrive at the apparatus 100 via an electromagnetic carrier signal or be copied from a physical entity such as a computer program product, a memory device or a record medium such as a USB stick, a Compact Disc (CD), a Compact Disc Read-Only Memory (CD-ROM), a Digital Versatile Disk (DVD) or a Blu-ray disk.

Figure 2 is a block diagram depicting an apparatus 200 in accordance with an example embodiment of the invention. The apparatus 200 may be an electronic device such as a module comprised by an automation system or a control system, a Personal Computer (PC), a laptop, a desktop, a wireless terminal, a communication terminal, a control apparatus, a computing device or the like. In the examples below it is assumed that the apparatus 200 is a computing device.

In the example embodiment of Figure 2, the apparatus 200 is illustrated as comprising the apparatus 100, a display 210, a communication module 230, and a user interface 220 for interacting with the computing device 200.

The display 210 may also be configured to act as a user interface. For example, the display may be a touch screen display. Additionally or alternatively, the user interface may also comprise a manually operable control such as a button, a key, a touch pad, a joystick, a stylus, a pen, a roller, a rocker, a keypad, a keyboard or any suitable input mechanism for inputting and/or accessing information.

The apparatus 200 may be configured to, using the communication module 230, establish radio communication with another device using, for example, a cellular network, a Bluetooth or WiFi connection, or the like.

The communication module 230 may comprise a module enabling wireless or wired communication with one or more devices. The communication module 230 may be configured to, for example, receive and/or transmit information using a wireless or wired connection. For example, the communication module 230 may be configured to receive radio signals from a device and/or transmit radio signals to the device.

The communication module 230 my comprise, for example, a module enabling Bluetooth, Zigbee, a low power wide area (LPWA) communication or any other suitable module configured to receive and/or transmit radio signals.

In an example embodiment, the display 210, the user interface 220 and/or the communication module 230 may be external to and separate from the apparatus 200, but operatively connected to the apparatus 200.

According to an example embodiment, the apparatus 200 is associated with a work machine. An apparatus associated with a work machine may comprise, for example, an apparatus operatively connected to the work machine. The apparatus 200 may be operatively connected to the work machine via a wired connection or a wireless connection.

According to an example embodiment, the apparatus 200 comprises a control unit configured to control operations of a work machine.

The apparatus 200 may be a control unit comprised by the work machine. The control unit may be configured to control, for example, at least some functions and/or actuators of the work machine.

A work machine may comprise, for example, a mining machine such as a mining drill, an earth mover, crushing equipment, feeding equipment or conveying equipment.

According to an example embodiment, the work machine comprises a load haul dump (LHD) machine, a breaker, a drilling rig, a rock bolter, a dump truck, a crusher, or a screening device.

According to an example embodiment, the work machine comprises the apparatus 200.

According to an example embodiment, the apparatus 200 is configured to communicate with one or more devices. For example, the apparatus 200 may be configured to communicate with a cloud server, a local server, an edge computing server, a mobile computing device, and/or different kinds of devices or machinery, or the like.

According to an example embodiment, the apparatus 200 is configured to receive information on a work machine. Information on a work machine may comprise, for example, information on operation of the work machine, information on capabilities of the work machine, and/or information on the environment of the work machine.

The apparatus 200 may be configured to receive the information on a work machine from one or more sensors associated with the work machine and/or from one or more devices associated with the work machine such as one or more devices controlling or monitoring operation of the work machine.

According to an example embodiment, the apparatus 200 is configured to receive information on an operational context of the work machine.

Information on an operational context of a work machine may comprise data describing operation of the work machine in a particular context. An operational context of a work machine may relate to a work cycle of the work machine or an environment of the work machine while operating.

A work cycle may comprise a sequence of routines for performing a task assigned to the work machine. A sequence of routines may comprise, for example, a sequence of operation phases and/or states of the work machine. For example, a work cycle may comprise an autonomous loading and hauling cycle, and the loading and hauling cycle may comprise, for example, an autonomous driving phase, a loading phase, an autonomous driving phase and an unloading phase. One or more phases may further comprise sub-phases or states of the work machine.

Data describing operation of the work machine may comprise work machine internal data and/or work machine external data.

Work machine internal data may comprise data from an internal source of the work machine. Work machine internal data may comprise, for example, data produced by the work machine during operation of the work machine such as measurement data received from one or more sensors of the work machine. Work machine internal data may comprise, for example, data relating to operation of the work machine such as a distance travelled by the work machine, duration of operation by the work machine, or the like.

An internal source may comprise a source configured to operate in dependence upon operation of the work machine.

Work machine external data may comprise data from an external source such as data detected by the apparatus 200 associated with the work machine. Work machine external data may comprise, for example, information on detected environment of the work machine. Work machine external data may comprise, for example, data relating to signals detected by the apparatus 200, image information about the environment, or the like.

An external source may comprise a source configured to operate independent of the work machine.

Information on an operational context of a work machine may comprise information received by the apparatus 200, for example, during operation of the work machine.

Receiving information on an operational context of the work machine may comprise detecting information on an operational context of the work machine based on, for example, information received from one or more sensors, or receiving information on the operational context of the work machine from an external source such as a cloud server.

As explained above, the apparatus 200 may be configured to receive information on an operational context of the work machine from a plurality of sources such as internal source and/or external sources. For example, the apparatus 200 may be configured to receive information on the operational context of the work machine from, for example, one or more sensors, via a receiver or transceiver, from an imaging device such as a camera, a positioning device, or a time measuring device.

According to an example embodiment, information on the operational context comprises information provided by at least one of the following: a sensor, a transceiver, an imaging device or a clock.

As discussed above, the apparatus 200 may be configured to communicate with one or more devices. Communicating with one or more device may comprise, for example, receiving signals from or transmitting signals to one or more devices.

According to an example embodiment, the apparatus 200 is configured to detect radio signals such as beacon signals. According to an example embodiment, a beacon signal comprises a radio signal broadcasted by a beacon.

A beacon may be configured to support, for example, different kinds of protocols and a beacon signal may comprise different types of data.

A beacon may comprise a radio transmitter configured to broadcast radio signals to devices within a range of the beacon. A range of a beacon may comprise a distance of meters or tens of meters such as 10 meters, 50 meters, 70 meters or even more. However, it should be noted that the range may depend upon hardware capability, a type of the beacon and/or environment of the beacon. For example, a range of a beacon may drop, for example, through walls made of metal or brick.

According to an example embodiment, the apparatus 200 is configured to detect at least one beacon signal. The apparatus 200 may be configured to listen for beacon signals at set intervals or continuously. According to an example embodiment, the apparatus 200 is configured to listen for beacon signals continuously.

Without limiting the scope of the claims, an advantage of continuously listening for beacon signals is that the apparatus has updated information on presence of beacon signals, thereby enabling quickly triggering any required actions.

According to an example embodiment, the apparatus 200 is configured to detect at least one beacon signal provided by a beacon associated with equipment attachable to the work machine.

Detecting the at least one beacon signal may comprise, for example, receiving an advertising packet from a beacon.

According to an example embodiment, the equipment attachable to the work machine comprises at least one of the following: a bucket, a breaking hammer, a rock drilling machine, a rock bolting machine, transmission, an engine, a pump, a battery, a head, a truck tub or differentials.

The at least one beacon signal may comprise, for example, a signal broadcast by the beacon such as a Bluetooth low energy beacon, Zigbee beacon, or the like. According to an example embodiment, the at least one beacon signal comprises a Bluetooth low energy signal. According to another example embodiment, the at least one beacon signal comprises a Zigbee signal.

According to an example embodiment, the detected beacon signal comprises data such as identification information of the beacon and/or other data.

According to an example embodiment, the at least one beacon signal comprises identification data identifying the beacon. For example, a beacon signal may comprise identification information such as a universal unique identifier (UUID) identifying the beacon.

The data may comprise, for example, data relating to the equipment attachable to the work machine such as information on a type of the equipment, identification information of the equipment such as a serial number of the equipment, one or more characteristics of the equipment such as dimensions of the equipment, material of the equipment, or the like.

According to an example embodiment, the apparatus 200 is configured to store information relating to the detected at least one beacon signal.

Information relating to the detected beacon signal may comprise, for example, one or more properties of the beacon signal, time information relating to the beacon signal, location information relating to the beacon signal, information on one or more changes in the beacon signal, identification information of the beacon signal and/or data included in the beacon signal. For example, the apparatus 200 may be configured to store identification information of the beacon and information on a time instance when the beacon signal was detected, a location of the work machine when the beacon signal was detected, a duration of a detected beacon signal, or the like.

The apparatus 200 may be configured to store information on beacon signals detected, for example, on a work site. The stored information may comprise identification of the detected beacon signal. In an example embodiment, the identification of the detected beacon signal is associated with information on a location of the work machine and/or a time instance when the beacon signal was detected by the apparatus 200.

Without limiting the scope of the claims, an advantage of storing information relating to the detected at least one beacon signal is that the apparatus 200 may record information on equipment available on a work site. This enables providing an up-to-date overview of equipment located on a work site, for example, to a remote operator, or maintenance personnel.

According to an example embodiment, the apparatus 200 is configured to provide information relating to the detected at least one beacon signal to an external device such as a cloud server. For example, the apparatus 200 may be configured to communicate with the external device and provide information relating to a plurality of beacon signals detected on a work site.

Without limiting the scope of the claims, an advantage of providing information relating to the detected at least one beacon signal to an external device is that the apparatus 200 maybe used as a link between, for example, maintenance personnel and equipment available on a work site. This enables locating a piece of equipment even in situations where the piece of equipment is not attached to a work machine.

According to an example embodiment, the apparatus 200 is configured to determine, based on the at least one beacon signal, a proximity status of the equipment, the proximity status relating to a proximity of the equipment to the work machine.

A proximity status may comprise information on proximity of the equipment with respect to the work machine. Information on proximity of the equipment with respect to the work machine may comprise, for example, an indication that the equipment is within a predetermined threshold distance from the work machine, a beacon signal power level received by the apparatus 200, and/or a distance between the equipment and the work machine.

A proximity status may comprise a numerical value or a status indication. For example, a numerical value may comprise a value indicating a distance between the equipment and the work machine or a power level of a detected beacon signal. A status indication may comprise, for example, an indication that the equipment is within a predetermined threshold distance or the equipment is not within a predetermined threshold distance.

A power level of a detected beacon signal may comprise a strength of the at least one beacon signal indicated by a received signal strength indicator (RSSI). RSSI indicates an estimated measure of power level received by the apparatus 200. A high RSSI indicates that the equipment and the work machine are physically close to each other and a low RSSI indicates that the equipment and the work machine devices are further apart from each other or that there are obstacles in between the equipment and the work machine.

According to an example embodiment, the apparatus 200 is configured to determine the proximity status based on a strength of the at least one beacon signal.

The apparatus 200 may be configured to validate the proximity status based on the information on the operational context of the work machine.

According to an example embodiment, the apparatus 200 is configured to process the information on the operational context of the work machine for determining at least one criterion for validating the proximity status.

Processing the information on the operational context may comprise, for example, determining a type of the information on the operational context such as a type of data describing operation of the work machine in a particular context. A type of data may comprise, for example, data indicating a distance, signal strength, a period of time, or the like. Therefore, different types of the information on the operational context data may be associated with different types of measurement units.

According to an example embodiment, the apparatus 200 is configured to determine, based on the information on the operational context of the work machine, at least one criterion relating to the proximity status of the equipment.

Determining the at least one criterion relating to the proximity status of the equipment may comprise, for example, selecting at least one predetermined criterion or determining the at least one criterion, for example, based on data describing operation of the work machine in a particular context.

The at least one criterion may comprise one or more variables relating to information on the operational context or the proximity status. The one or more variables may comprise, for example, one or more threshold values and/or one or more Boolean values such as "true" or "false" for data describing operation of the work machine in a particular context.

According to an example embodiment, the operational context of the work machine comprises a distance travelled by the work machine and the at least one criterion comprises a predetermined distance travelled by the work machine while the proximity status is maintained.

According to an example embodiment, the operational context of the work machine comprises a duration of operation by the work machine and the at least one criterion comprises a predetermined duration of operation by the work machine while the proximity status is maintained.

According to an example embodiment, the operational context of the work machine comprises a plurality of detected beacon signals by the work machine and the at least one criterion comprises a reduced number of detected beacon signals while the proximity status is maintained.

Without limiting the scope of the claims, an advantage of determining at least one criterion relating to the proximity status of the equipment based on the information on the operational context of the work machine is that the proximity status may be validated based on the information on the operational context of the work machine. Validation of the proximity status may be needed, for example, at work sites or workshops where different kinds of disturbances may affect detection of a beacon signal due to, for example, rocks or metal obstacles.

Validated proximity status may be used for determining a status of the equipment. A status of the equipment may comprise, for example, information on whether the equipment is in use or not.

According to an example embodiment, the apparatus 200 is configured to determine, in response to determining that the at least one criterion for the proximity status of the equipment is fulfilled, that the equipment is attached to the work machine.

For example, the apparatus 200 may be configured to determine that the equipment is attached to the work machine if the work machine has travelled a predetermined distance and the proximity status is maintained. As another example, the apparatus 200 maybe configured to determine that the equipment is attached to the work machine if the work machine has operated for a predetermined period of time and the proximity status is maintained. As a further example, the apparatus 200 maybe configured to determine that the equipment is attached to the work machine if the number of beacon signals is detected is reduced while the proximity status is maintained.

According to an example embodiment, the apparatus 200 is configured to determine that the equipment is attached to the work machine when a plurality of criteria is fulfilled.

Without limiting the scope of the claims, an advantage of determining that the equipment is attached to the work machine is that usage of the equipment is may be monitored. Monitoring usage of equipment attachable to a work machine enables, for example, predicting servicing needs, tracking the life cycle of the equipment and/or monitoring efficiency of the work machine using different types of equipment.

According to an example embodiment, the apparatus 200 is configured to start monitoring usage of the equipment in response to determining that the equipment is attached to the work machine.

Monitoring usage of equipment may comprise, for example, tracking operational data relating to the equipment and/or predicting servicing needs of the equipment.

According to an example embodiment, the apparatus 200 is configured to provide information relating to usage of equipment to an external device such as a cloud server. For example, the apparatus 200 may be configured to communicate with the external device and provide information relating to equipment attached to work machines on a worksite.

According to an example embodiment, the apparatus 200 comprises means for performing features of the apparatus 200, wherein the means for performing comprises at least one processor 110, at least one memory 160 including computer code 120 configured to, with the at least one processor 110, cause the performance of the apparatus 200.

According to an example embodiment, the apparatus 200 comprises means for receiving information on an operational context of the work machine, means for detecting at least one beacon signal provided by a beacon associated with equipment attachable to the work machine, means for determining, based on the at least one beacon signal, a proximity status of the equipment, the proximity status relating to a proximity of the equipment to the work machine, means for determining, based on the operational context of the work machine, at least one criterion for the proximity status of the equipment, and means for determining, in response to determining that the at least one criterion for the proximity status of the equipment is fulfilled, that the equipment is attached to the work machine.

The apparatus 200 may further comprise means for determining the proximity status based on a strength of the at least one beacon signal and/or means for listening for beacon signals continuously.

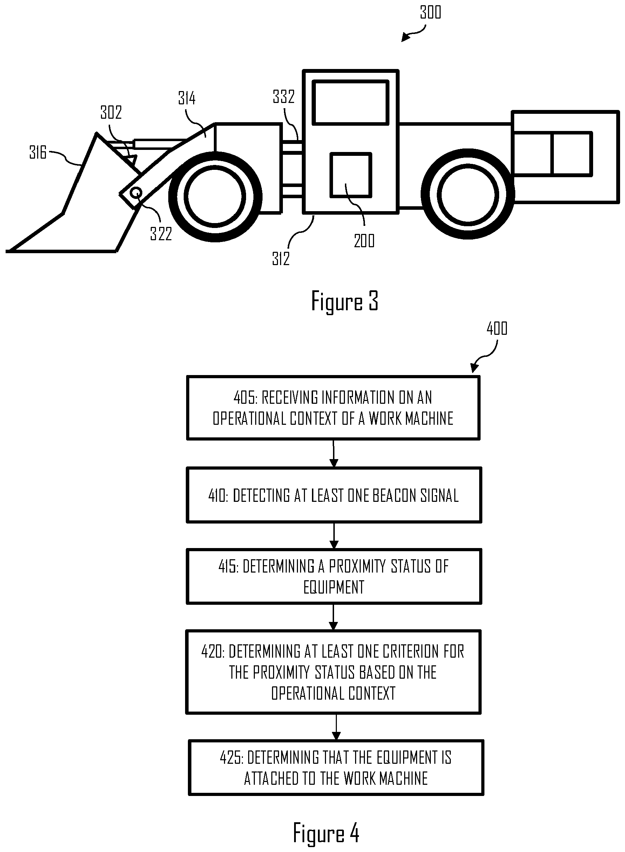

Figure 3 illustrates an example work machine 300 and beacon 302 associated with equipment 316 attachable to the work machine 300. The work machine may comprise, for example, a load and haul (LHD) machine, or a machine mainly intended for loading.

In the example of Figure 3, the work machine comprises a carrier 312, at least one boom 314 and a bucket 316 attached in a pivotable or otherwise movable manner to the at least one boom 314. For example, the bucket 316 maybe coupled to two booms 314. The attachment may comprise at least one pivot 322, and the bucket 316 may be turned with respect to the at least one pivot. The work machine 300 may be an articulated vehicle comprising two sections connected by a joint 332.

The work machine 300 comprises at least one apparatus 200. In the example of Figure 3, the apparatus 200 comprises a control unit configured to control operations of a work machine.

The apparatus 200 is configured to receive information on an operational context of the work machine 300, detect at least one beacon signal provided by a beacon 302 associated with equipment attachable to the work machine, determine, based on the at least one beacon signal, a proximity status of the equipment 316, the proximity status relating to a proximity of the equipment 316 to the work machine 300, determine, based on the information on the operational context of the work machine 300, at least one criterion relating to the proximity status of the equipment 316, and determine, in response to determining that the at least one criterion for the proximity status of the equipment 316 is fulfilled, that the equipment is attached to the work machine 300.

In the example of Figure 3, the work machine comprises an LHD machine, or a machine mainly intended for loading and the equipment 316 comprises a bucket. However, it should be noted that the work machine may comprise also other kinds of machines such as a breaker, a drilling rig, a rock bolter, or a dump truck and the equipment attachable to the work machine may comprise, for example, a breaking hammer, a rock drilling machine, a rock bolting machine, transmission, an engine, a pump, a battery, a head, a truck tub or differentials.

Figure 4 illustrates an example method 400 incorporating aspects of the previously disclosed embodiments. More specifically, the example method 400 illustrates determining a proximity status. The method may comprise a computer-implemented method performed by the apparatus 200.

The method starts with receiving 405 information on an operational context of a work machine. Information on an operational context of a work machine may comprise data describing operation of the work machine in a particular context. Data describing operation of the work machine may comprise work machine internal data and/or work machine external data.

Information may be received from one or more sensors associated with the work machine and/or from one or more devices associated with the work machine such as one or more devices controlling or monitoring operation of the work machine. In the example of Figure 4, information on the operational context comprises information provided by at least one of the following: a sensor, a transceiver, an imaging device or a clock.

The method continues with detecting 410 at least one beacon signal provided by a beacon associated with equipment attachable to the work machine. The at least one beacon signal may comprise, for example, a Bluetooth low energy signal.

The method continues with determining 415, based on the at least one beacon signal, a proximity status of the equipment, the proximity status relating to a proximity of the equipment to the work machine. The proximity status may be determined, for example, based on a strength of the at least one beacon signal.

A proximity status may comprise information on proximity of the equipment with respect to the work machine. Information on proximity of the equipment with respect to the work machine may comprise, for example, an indication that the equipment is within a predetermined threshold distance from the work machine, a beacon signal power level received by the apparatus 200, and/or a distance between the equipment and the work machine.

The method further continues with determining 420, based on the operational context of the work machine, at least one criterion for the proximity status of the equipment.

Determining the at least one criterion relating to the proximity status of the equipment may comprise, for example, selecting at least one predetermined criterion or determining the at least one criterion, for example, based on data describing operation of the work machine in a particular context.

For example, the operational context of the work machine may comprise a distance travelled by the work machine and the at least one criterion comprises a predetermined distance travelled by the work machine while the proximity status is maintained.

As another example, the operational context of the work machine comprises a duration of operation by the work machine and the at least one criterion comprises a predetermined duration of operation by the work machine while the proximity status is maintained.

As a further example, the operational context of the work machine comprises a plurality of detected beacon signals by the work machine and the at least one criterion comprises a reduced number of detected beacon signals while the proximity status is maintained.

The method further continues with determining 425, in response to determining that the at least one criterion for the proximity status of the equipment is fulfilled, that the equipment is attached to the work machine.

For example, it may be determined that the equipment is attached to the work machine if the work machine has travelled a predetermined distance and the proximity status is maintained, the work machine has operated for a predetermined period of time and the proximity status is maintained, and/or the number of detected beacon signals is reduced while the proximity status is maintained.

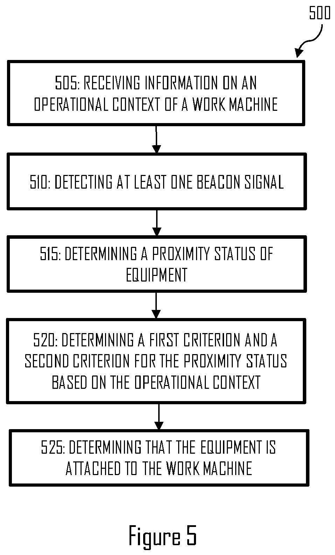

Figure 5 illustrates another example method 500 incorporating aspects of the previously disclosed embodiments. More specifically, the example method 500 illustrates determining a proximity status based on a first criterion and a second criterion. The method may comprise a computer-implemented method performed by the apparatus 200.

In the example of Figure 5, it is assumed that the work machine is an LHD machine, and the equipment is a bucket attachable to the LHD machine.

The method starts with receiving 505 information on an operational context of the work machine. Information on an operational context of a work machine may comprise data describing operation of the work machine in a particular context. Data describing operation of the work machine may comprise work machine internal data and/or work machine external data.

In the example of Figure 5, information on the operational context comprises a distance travelled by the LHD machine and information on a plurality of beacon signals detected by the apparatus 200, the plurality of beacon signals comprising at least one beacon signal provided by a beacon associated with the bucket attachable to the LHD machine.

The method continues with detecting 510 at least one beacon signal provided by a beacon associated with equipment attachable to the work machine. The at least one beacon signal may comprise, for example, a Bluetooth low energy signal. In the example of Figure 5, a plurality of beacon signals are detected.

The method continues with determining 515, based on the at least one beacon signal, a proximity status of the equipment, the proximity status relating to a proximity of the equipment to the work machine. The proximity status may be determined, for example, based on a strength of the at least one beacon signal.

A proximity status may comprise information on proximity of the equipment with respect to the work machine. Information on proximity of the equipment with respect to the work machine may comprise, for example, an indication that the equipment is within a predetermined threshold distance from the work machine, a beacon signal power level received by the apparatus 200, and/or a distance between the equipment and the work machine.

The method further continues with determining 520, based on the operational context of the work machine, a first criterion and a second criterion for the proximity status of the equipment.

In the example of Figure 5, the first criterion comprises a predetermined distance travelled by the work machine and the second criterion comprises a reduced number of beacon signals detected by the apparatus 200 while the at least one beacon signal provided by a beacon associated with equipment attachable to the work machine is maintained.

Determining the first criterion and the second criterion relating to the proximity status of the equipment may comprise, for example, selecting a predetermined criterion or determining the one criterion, for example, based on data describing operation of the work machine in a particular context.

The method further continues with determining 525, in response to determining that the first criterion and the second criterion for the proximity status of the equipment are fulfilled, that the equipment is attached to the work machine.

Without limiting the scope of the claims, an advantage of an advantage of determining that the equipment is attached to the work machine is that usage of the equipment is may be monitored.

Without in any way limiting the scope, interpretation, or application of the claims appearing below, a technical effect of one or more of the example embodiments disclosed herein is that usage of equipment attachable to a work machine may be monitored thereby enabling, for example, predicting servicing needs, tracking the life cycle of the equipment and/or monitoring efficiency of the work machine using different types of equipment.

As used in this application, the term "circuitry" may refer to one or more or all of the following: (a) hardware-only circuit implementations (such as implementations in only analog and/or digital circuitry) and (b) combinations of hardware circuits and software, such as (as applicable): (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions) and (c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Embodiments of the present invention may be implemented in software, hardware, application logic or a combination of software, hardware and application logic. The software, application logic and/or hardware may reside on the apparatus, a separate device or a plurality of devices. If desired, part of the software, application logic and/or hardware may reside on the apparatus, part of the software, application logic and/or hardware may reside on a separate device, and part of the software, application logic and/or hardware may reside on a plurality of devices. In an example embodiment, the application logic, software or an instruction set is maintained on any one of various conventional computer-readable media. In the context of this document, a 'computer-readable medium' may be any media or means that can contain, store, communicate, propagate or transport the instructions for use by or in connection with an instruction execution system, apparatus, or device, such as a computer, with one example of a computer described and depicted in FIGURE 2. A computer-readable medium may comprise a computer-readable storage medium that may be any media or means that can contain or store the instructions for use by or in connection with an instruction execution system, apparatus, or device, such as a computer.

If desired, the different functions discussed herein may be performed in a different order and/or concurrently with each other. Furthermore, if desired, one or more of the above-described functions may be optional or may be combined.

Although various aspects of the invention are set out in the independent claims, other aspects of the invention comprise other combinations of features from the described embodiments and/or the dependent claims with the features of the independent claims, and not solely the combinations explicitly set out in the claims.

It will be obvious to a person skilled in the art that, as the technology advances, the inventive concept can be implemented in various ways. The invention and its embodiments are not limited to the examples described above but may vary within the scope of the claims.

## Claims

1. An apparatus associated with a work machine, the apparatus comprising at least one processor and at least one memory including computer program code, the at least one memory and the computer program code configured to with the at least one processor, cause the apparatus at least to:
receive information on an operational context of the work machine;
detect at least one beacon signal provided by a beacon associated with equipment attachable to the work machine;
determine, based on the at least one beacon signal, a proximity status of the equipment, the proximity status relating to a proximity of the equipment to the work machine;
determine, based on the information on the operational context of the work machine, at least one criterion relating to the proximity status of the equipment; and
determine, in response to determining that the at least one criterion for the proximity status of the equipment is fulfilled, that the equipment is attached to the work machine.

2. The apparatus according to claim 1, wherein the at least one beacon signal comprises a Bluetooth low energy signal or a Zigbee signal.

3. The apparatus according to claim 1 or 2, wherein the at least one memory and the computer program code are configured to with the at least one processor, cause the apparatus to determine the proximity status based on a strength of the at least one beacon signal.

4. The apparatus according to any preceding claim, wherein information on the operational context comprises information provided by at least one of the following: a sensor, a transceiver, an imaging device or a clock.

5. The apparatus according to any preceding claim, wherein the operational context of the work machine comprises a distance travelled by the work machine and the at least one criterion comprises a predetermined distance travelled by the work machine while the proximity status is maintained.

6. The apparatus according to any preceding claim, wherein the operational context of the work machine comprises a duration of operation by the work machine and the at least one criterion comprises a predetermined duration of operation by the work machine while the proximity status is maintained.

7. The apparatus according to any preceding claim, wherein the operational context of the work machine comprises a plurality of detected beacon signals by the work machine and the at least one criterion comprises a reduced number of detected beacon signals while the proximity status is maintained.

8. The apparatus according to any preceding claim, wherein the equipment attachable to the work machine comprises at least one of the following: a bucket, a breaking hammer, a rock drilling machine, a rock bolting machine, transmission, an engine, a pump, a battery, a head, a truck tub or differentials.

9. The apparatus according to any preceding claim, wherein the at least one beacon signal comprises identification data identifying the beacon.

10. The apparatus according to any preceding claim, wherein the apparatus comprises a control unit configured to control operations of the work machine.

11. The apparatus according to any preceding claim, wherein the at least one memory and the computer program code are configured to with the at least one processor, cause the apparatus to listen for beacon signals continuously.

12. The apparatus according to any preceding claim, wherein the work machine comprises a load haul dump (LHD) machine, a breaker, a drilling rig, a rock bolter, or a dump truck.

13. A work machine comprising an apparatus according to any preceding claim.

14. A method comprising:
receiving information on an operational context of the work machine;
detecting at least one beacon signal provided by a beacon associated with equipment attachable to the work machine;
determining, based on the at least one beacon signal, a proximity status of the equipment, the proximity status relating to a proximity of the equipment to the work machine;
determining, based on the operational context of the work machine, at least one criterion for the proximity status of the equipment; and
determining, in response to determining that the at least one criterion for the proximity status of the equipment is fulfilled, that the equipment is attached to the work machine.

15. A computer program comprising instructions for causing an apparatus to perform at least the following:
receiving information on an operational context of the work machine;
detecting at least one beacon signal provided by a beacon associated with equipment attachable to the work machine;
determining, based on the at least one beacon signal, a proximity status of the equipment, the proximity status relating to a proximity of the equipment to the work machine;
determining, based on the operational context of the work machine, at least one criterion for the proximity status of the equipment; and
determining, in response to determining that the at least one criterion for the proximity status of the equipment is fulfilled, that the equipment is attached to the work machine.
